# EUROPÄISCHE PATENTSCHRIFT

(11) **EP 1 493 692 B1**
(45) Veröffentlichungstag und Bekanntmachung des Hinweises auf die Patenterteilung: **20.12.2006**
(21) Anmeldenummer: 03014900.9
(22) Anmeldetag: 01.07.2003
(51) Int. Cl.: B65G 23/44

(54) **Vorrichtung zum Strecken und Lösen eines über Umlenkmittel geführten endlosen Transportbandes**
Releasable tensioning device for an endless conveying belt
Dispositif retractable de tension pour bande transporteuse sans fin

(43) Veröffentlichungstag der Anmeldung: 05.01.2005
(73) Patentinhaber: Habasit AG, 4153 Reinach (CH)
(72) Erfinder: Iseli, Hansrudolf, 4123 Allschwill (CH)
(74) Vertreter: Bollhalder, Renato

(56) Entgegenhaltungen:
- FR-A- 2 465 662
- US-A- 3 921 793
- US-A- 5 156 261
- US-B1- 6 193 052
- US-B1- 6 298 981

## Beschreibung

Die Erfindung betrifft eine Vorrichtung zum Strecken und Lösen eines über Umlenkmittel geführten endlosen Transportbandes gemäss dem Oberbegriff des unabhängigen Patentanspruchs 1.

Solche Vorrichtungen werden beispielsweise dazu verwendet, endlose Transportbänder aus Kunststoffgliedern beliebiger Breite aus einem betriebstauglichen leicht gespanntem Zustand zu lösen bzw. solche Transportbänder in einen betriebstauglichen Zustand zu strecken. Dies geschieht, indem die Distanz zwischen zwei Umlenkrollen, über die das Transportband geführt ist, verkleinert bzw. vergrössert wird. Der gelöste Zustand des Transportbandes kann verschiedene Prozesse erleichtern, wie beispielsweise Wartungsarbeiten am Transportband, insbesondere die Reinigung. Dazu kann zusätzlich ein Anheben des Transportbandes mit geeigneten Hilfsmitteln nützlich sein.

Zum Lösen und Strecken von endlosen Transportbändern sind in der Vergangenheit schon verschiedene Lösungsansätze vorgeschlagen worden. So ist beispielsweise in der NL 9002835 A eine Konstruktion vorgeschlagen, bei welcher der Abstand zwischen den Umlenkrollen auf einer Ebene parallel zur Laufrichtung des Bandes verändert wird. Charakteristisch für die in der NL 9002835 A vorgeschlagene Vorrichtung ist, dass sie das Transportband in gespanntem Zustand unter einer konstanten Betriebsspannung hält und zum Beispiel temperaturbedingte Dehnungen oder Schrumpfungen ausgleicht.

Als weiteres Beispiel ist in der DE 42 33 131 A1 eine Vorrichtung zum Strecken und Lösen eines endlosen Transportbandes offenbart, bei welcher eine der Umlenkrollen auf einem schwenkbar gelagerten Spannhebel angeordnet ist. Durch Schwenken des Spannhebels ändert sich die Distanz zwischen den Umlenkrollen und das Transportband wird gespannt bzw. gelöst.

Des weiteren sind heute Vorrichtungen zum Strecken und Lösen eines endlosen Transportbandes im Einsatz, bei welchen der Abstand zwischen den Umlenkrollen manuell auf einer Ebene parallel zur Laufrichtung des Bandes verändert wird. Die zu verschiebende Umlenkrolle ist manuell von einem Rahmen einer Transportbandförderanlage lösbar und geführt verschiebbar. Solche Vorrichtungen gewährleisten nicht, dass die Umlenkrolle gleichmässig, d.h. in Laufrichtung links und rechts gleich, verschoben wird.

Neben den Vorrichtungen zum Strecken und Lösen von endlosen Transportbändern sind heute Stützkonstruktionen im Einsatz, die das Transportband in seinem Lauf zwischen den Umlenkrollen beim Tragen seines Eigengewichts und des Gewichts von auf seiner Oberfläche transportierten Gütern unterstützen. Bei lösbaren Umlenkrollen ist jeweils eine Lücke zwischen der Stützkonstruktion und der Umlenkrolle vorgesehen, damit die Umlenkrolle beim Lösen nicht mit der Stützkonstruktion kollidiert. Diese Lücke kann einen unsauberen Lauf und einen erhöhten Verschleiss des Transportbandes bewirken.

Aus der US 5 156 261 A und der US 6 298 981 B1 sind Vorrichtungen zum Strecken und Lösen von endlosen Transportbändern mit solchen Stützkonstruktionen bekannt, die teilweise ausserdem Stützmittel umfassen, die mit der lösbaren Umlenkrolle mitverschiebbar sind. Auch bei diesen Vorrichtungen ist jeweils eine Lücke zwischen der Stützkonstruktion und den Stützmitteln vorgesehen, damit die Stützmittel beim Lösen des Transportbands nicht mit der Stützkonstruktion kollidieren.

In der FR 2 465 662 A ist eine Vorrichtung gemäß dem Oberbegriff des Anspruchs 1 offenbart.

Der vorliegenden Erfindung liegt daher die Aufgabe zu Grunde, eine Vorrichtung zum Strecken und Lösen eines über Umlenkmittel geführten endlosen Transportbandes vorzuschlagen, die gewährleistet, dass das Transportband im Betrieb auch zwischen dem verschiebbaren Umlenkmittel und der Stützkonstruktion gestützt ist. Vorzugsweise soll die Verschiebung der Umlenkrolle gleichmässig erfolgen.

Die Aufgabe wird erfindungsgemäss durch eine Vorrichtung gelöst, wie sie im unabhängigen Patentanspruch 1 definiert ist. Vorteilhafte Ausführungsvarianten der erfindungsgemässen Vorrichtung ergeben sich aus den abhängigen Patentansprüchen.

Das Wesen der Erfindung besteht im Folgenden: Eine Vorrichtung zum Strecken und Lösen eines über Umlenkmittel geführten endlosen Transportbandes, welches zwischen den Umlenkmitteln durch eine Stützkonstruktion zusätzlich gestützt ist, umfasst Verschiebemittel zum Verschieben von verschiebbaren Umlenkmitteln parallel zur Laufrichtung des Transportbandes. Sie umfasst zusätzlich Stützmittel, welche beim Verschieben der verschiebbaren Umlenkmittel parallel zur Laufrichtung eines Transportbandes mitverschiebbar sind. Dabei stützen die Stützmittel das Transportband zwischen der Stützkonstruktion und den verschiebbaren Umlenkmitteln.

Die erfindungsgemässe Vorrichtung hat den Vorteil, dass das Transportband nicht in einer Lücke zwischen der Stützkonstruktion und den verschiebbaren Umlenkmitteln durchhängt, so dass das Transportband runder läuft und weniger Verschleiss aufweist.

Die Stützmittel der Vorrichtung sind dabei so ausgebildet, dass sie das Transportband in dem Bereich zwischen der Stützkonstruktion und den verschiebbaren Umlenkmitteln, in dem das Transportband von der Stützkonstruktion und den verschiebbaren Umlenkmitteln nicht gestützt ist, in jeder Verschiebestellung durchgehend stützen. Eine durchgehende, lückenlose Stützung des Transportbandes gewährleistet einen idealen runden Lauf und einen minimalen Verschleiss desselben.

Erfindungsgemäß umfasst die Stützkonstruktion Gleitleisten und die Stützmittel Gleitleistenstücke, wobei die Gleitleistenstücke der Stützmittel zu den Gleitleisten der Stützkonstruktion seitlich versetzt sind. Bei einer Verschiebung der Stützmittel in der Ebene der Stützkonstruktion und in Laufrichtung des Transportbandes ist dadurch gewährleistet, dass Stützmittel und Stützkonstruktion ineinander greifen ohne zu kollidieren und dass das Transportband in jeder Verschiebestellung der verschiebbaren Umlenkmittel durchgehend gestützt ist.

Bevorzugt umfassen die Verschiebemittel zwei Kurbelhebel, die über eine Kurbelachse drehfest miteinander verbunden sind und die jeweils über ein Gelenk mit jeweils einer Hebelstange drehbar verbunden sind, welche Hebelstangen ihrerseits mit den verschiebbaren Umlenkmitteln verbunden sind. Mit solchen Verschiebemitteln sind die zu verschiebenden Umlenkmittel selbsttätig parallel, d.h. in Laufrichtung des Transportbandes links und rechts gleich, verschiebbar. Ausserdem stellen sie sicher, dass die Streck- und Löselänge wiederholbar gleich gross gehalten werden kann. Eine solche Ausbildung der Verschiebemittel wirkt im Kniehebelprinzip und bewirkt, dass die Übersetzung von Betätigungs- zu Spannkraft während des Streckens des Transportbandes laufend zunimmt, was den Streckvorgang erleichtert.

Mit Vorteil weisen die verschiebbaren Umlenkmittel eine Umlenkachse auf und sind die Verschiebemittel so angeordnet, dass die Gelenke bei gestrecktem Transportband in einer Ebene zwischen der Umlenkachse und der Kurbelachse liegen. Auf diese Weise wirkt in der Betriebsstellung des Transportbandes, d.h. in gestrecktem Zustand, kein Drehmoment auf die Verschiebemittel, das durch die Spannung des Transportbandes bewirkt wird.

Vorzugsweise weisen die Verschiebemittel einen mit der Kurbelachse verbundenen Betätigungshebel auf, mit dem die Kurbelachse drehbar ist. Mit einem solchen Betätigungshebel kann die Vorrichtung manuell oder automatisch betrieben werden.

Bei einer bevorzugten Ausführungsvariante sind die Kurbelhebel oder die Hebelstangen der Verschiebemittel federnd, insbesondere als Spiral- oder Gasfedern, ausgestaltet. Dadurch gleichen sie eine mögliche Längenänderung des Transportbandes während des Betriebs laufend aus und stellen eine betriebsgerechte Spannung sicher.

Bevorzugt weisen die Hebelstangen der Verschiebemittel mehrere Verbindungslöcher auf, über die sie mit den Kurbelhebeln oder mit dem verschiebbaren Umlenkmittel verstellbar verbunden sind. Damit kann die Streck- und Löselänge der Vorrichtung und der Durchhang des Transportbandes im Untertrum eingestellt und verändert werden.

Bei einer bevorzugten Ausführungsvariante weist die erfindungsgemässe Vorrichtung Mittel zum automatisierten Drehen der Kurbelhebel auf, insbesondere einen Pneumatikzylinder. Eine solche Vorrichtung ermöglicht ein Strecken und Lösen des Transportbandes ohne manuelle Tätigkeit.

Vorzugsweise sind die verschiebbaren Umlenkmittel ortsfest mit den Stützmitteln verbunden. Dies bewirkt, dass die Stützmittel immer exakt die Verschiebung der Umlenkmittel mitmachen, was eine durchgehende Stützung des Transportbandes vereinfacht.

Im Folgenden wird die erfindungsgemässe Vorrichtung zum Strecken und Lösen eines über Umlenkmittel geführten endlosen Transportbandes unter Bezugnahme auf die beigefügten Zeichnungen und anhand von Ausführungsbeispielen detaillierter beschrieben. Es zeigen:
- Fig. 1 -: eine Seitenansicht eines ersten Ausführungsbeispiels einer Transportbandförderanlage mit einer erfindungsgemässen Vorrichtung zum Strecken und Lösen eines über Umlenkzahnräder umfassende Umlenkmittel geführten endlosen Transportbandes in gestrecktem Zustand;
- Fig. 2 -: eine Draufsicht auf die Transportbandförderanlage gemäss Fig. 1;
- Fig. 3 -: eine Seitenansicht der Transportbandförderanlage von Fig. 1, bei der sich die erfindungsgemässe Vorrichtung in gelöstem Zustand befindet;
- Fig. 4 -: eine Draufsicht auf die Transportbandförderanlage gemäss Fig. 3;
- Fig. 5 -: eine Seitenansicht eines zweiten Ausführungsbeispiels einer Transportbandförderanlage mit einer erfindungsgemässen Vorrichtung zum Strecken und Lösen eines über eine Umlenkrolle umfassende Umlenkmittel geführten endlosen Transportbandes in gestrecktem Zustand;
- Fig. 6 -: eine Draufsicht auf die Transportbandförderanlage gemäss Fig. 5;
- Fig. 7 -: eine Seitenansicht eines dritten Ausführungsbeispiels einer Transportbandförderanlage mit einer erfindungsgemässen Vorrichtung zum Strecken und Lösen eines über Umlenkmittel geführten endlosen Transportbandes in gestrecktem Zustand, bei der die erfindungsgemässe Vorrichtung mit federnden Hebelstangen ausgestaltet ist;
- Fig. 8 -: eine Draufsicht auf die Transportbandförderanlage gemäss Fig. 7;
- Fig. 9 -: eine Seitenansicht der Transportbandförderanlage gemäss Fig. 7, bei der sich die erfindungsgemässe Vorrichtung in gelöstem Zustand befindet;
- Fig. 10 -: eine Draufsicht auf die Transportbandförderanlage gemäss Fig. 9;
- Fig. 11 -: eine Seitenansicht eines vierten Ausführungsbeispiels einer Transportbandförderanlage mit einer erfindungsgemässen Vorrichtung zum Strecken und Lösen eines über Umlenkmittel geführten endlosen Transportbandes in gestrecktem Zustand, bei der die erfindungsgemässe Vorrichtung durch einen Pneumatikzylinder automatisiert ist; und
- Fig. 12 -: eine Seitenansicht der Transportbandförderanlage gemäss Fig. 11, bei der sich die erfindungsgemässe Vorrichtung in gelöstem Zustand befindet.

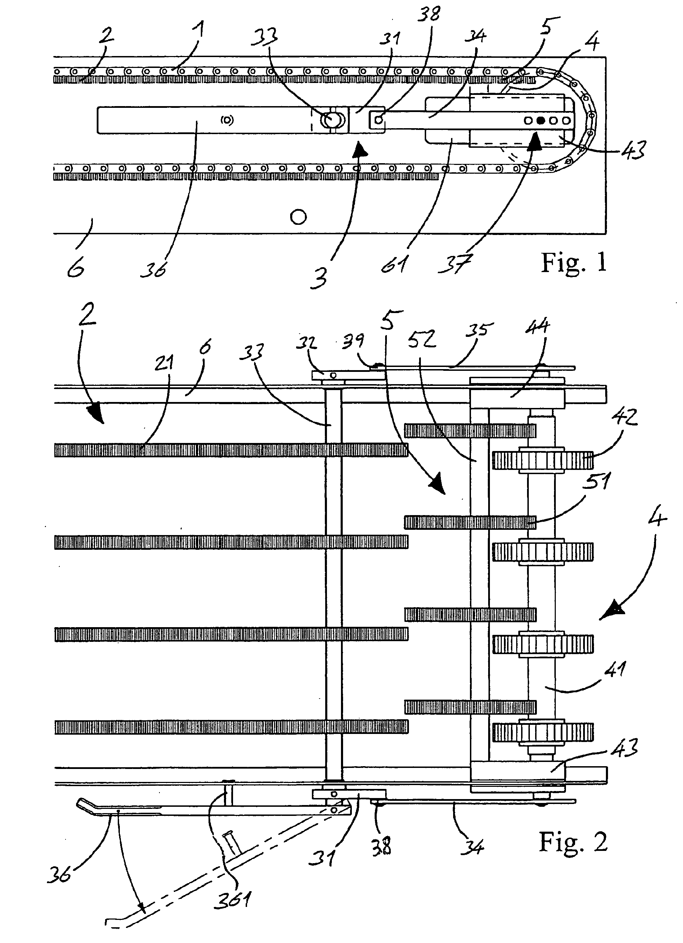

In den Fig. 1 und 2 ist ein erstes Ausführungsbeispiel einer Transportbandförderanlage mit einer erfindungsgemässen Vorrichtung in gestrecktem Zustand abgebildet. Ein Kunststoffglieder umfassendes, endloses Transportband 1 ist über eine Stützkonstruktion 2 horizontal geführt, die mehrere in Laufrichtung des Transportbandes 1 angeordnete, von einander beabstandete Gleitleisten 21 umfasst. Am Ende der Transportbandförderanlage wird das Transportband 1 über verschiebbare Umlenkmittel 4 um 180° umgeleitet. Diese umfassen eine Umlenkachse 41 und Umlenkzahnräder 42, welche mit der Umlenkachse 41 verbunden sind. Im Betrieb greifen die Umlenkzahnräder 42 mit den Zähnen in Aussparungen des Transportbandes 1 ein und lenken dieses schlupflos um. Die Umlenkachse 41 ist in einem Abstand, der in gestrecktem Zustand etwa einer anderthalbfachen Streck- bzw. Löselänge entspricht, vom Ende der Stützkonstruktion 2 in Umlenkachslagern 43, 44 gelagert, die in jeweils einer Aussparung 61 in einem Rahmen 6 der Transportbandförderanlage verschiebbar geführt sind.

Die verschiebbaren Umlenkmittel 4 sind durch Verschiebemittel 3 parallel zum Transportband 1, also horizontal, auf einer Ebene verschiebbar. Die Verschiebemittel 3 umfassen zwei Kurbelhebel 31, 32, die an ihrem einen Ende mit einer Kurbelachse 33 drehfest verbunden sind, und zwei Hebelstangen 34, 35, die über jeweils ein Gelenk 38, 39 mit dem anderen Ende jeweils eines der Kurbelhebel 31, 32 verbunden sind. Die Hebelstangen 34, 35 weisen Verbindungslöcher 37 auf, über jeweils eines von denen sie mit den verschiebbaren Umlenkmitteln 4 verbunden sind. Die Gelenke 38, 39 sind jeweils in einer Ebene beug- und streckbar, welche senkrecht zur Verschiebeebene der verschiebbaren Umlenkmittel 4 und parallel zur Laufrichtung des Transportbandes 1 verläuft.

Mit der Kurbelachse 33 verbunden ist ausserdem ein Betätigungshebel 36, mit dem die Kurbelachse 33 drehbar ist. Für ein vereinfachtes Bedienen der erfindungsgemässen Vorrichtung lässt sich der Betätigungshebel 36 seitlich vom Rahmen 6 der Transportbandförderanlage wegklappen. In eingeklapptem Zustand wird der Betätigungshebel 36 mit einem Positionierstift 361 über ein Loch im Rahmen 6 der Transportbandförderanlage befestigt, damit er nicht störend von der Transportbandförderanlage absteht.

In gestrecktem Zustand der erfindungsgemässen Vorrichtung liegt die Umlenkachse 41 der verschiebbaren Umlenkmittel 4 mit den Gelenken 38, 39 und der Kurbelachse 33 in einer horizontalen Ebene. In der gleichen Ebene befinden sich der Betätigungshebel 36, die Kurbelhebel 31, 32 und die Hebelstangen 34, 35. Dadurch wirkt in gestrecktem Zustand kein durch Spannkräfte erzeugtes Drehmoment auf die Kurbelachse 33.

Das in Fig. 1 und 2 dargestellte Ausführungsbeispiel der erfindungsgemässen Vorrichtung weist ausserdem Stützmittel 5 auf, die zusammen mit der Stützkonstruktion 2 und den Umlenkmitteln 4 das Transportband 1 beim Tragen seines Eigengewichts und des Gewichts von auf seiner Oberfläche angeordneten Gütern unterstützen. Die Stützmittel 5 umfassen einen Querträger 52, an dem die gleiche Anzahl an Gleitleistenstücken 51 von etwa zweifacher Streck- bzw. Löselänge angeordnet ist, wie die Stützkonstruktion 2 Gleitleisten 21 umfasst. Der Querträger 52 ist über die Umlenkachslager 43, 44 fest mit den verschiebbaren Umlenkmitteln 4 verbunden, so dass die Stützmittel 5 gemeinsam mit den verschiebbaren Umlenkmitteln 4 verschoben werden.

Die Gleitleistenstücke 51 sind seitlich versetzt zu den Gleitleisten 21 in Laufrichtung des Transportbandes 1 angeordnet, enden in Laufrichtung auf der einen Seite auf Höhe der Umlenkachse 41 und überlappen in Laufrichtung auf der anderen Seite das Ende der Stützkonstruktion 2 etwas. Durch diese Anordnung der Stützmittel 5 wird das Transportband 1 zwischen der Stützkonstruktion 2 und den verschiebbaren Umlenkmitteln 4 durchgehend gestützt, womit ein sauberer Lauf des Transportbandes 1 gewährleistet ist.

Eine weitere Stützkonstruktion ist für den Untertrum des Transportbandes 1 vorgesehen, um das Eigengewicht des Transportbandes 1 auch auf der Unterseite aufzunehmen. Zwischen dieser Stützkonstruktion und den verschiebbaren Umlenkmitteln 4 ist ein in Länge und Tiefe angemessener Banddurchhang vorhanden, da sich das Transportband 1 durch Temperaturveränderung oder durch Abnützung in den Gelenken der Glieder verlängern bzw. verkürzen kann. Über die Wahl der Verbindungslöcher 37, über welche die Hebelstangen 34, 35 mit den verschiebbaren Umlenkmitteln 4 verbunden sind, kann der Banddurchhang eingestellt werden.

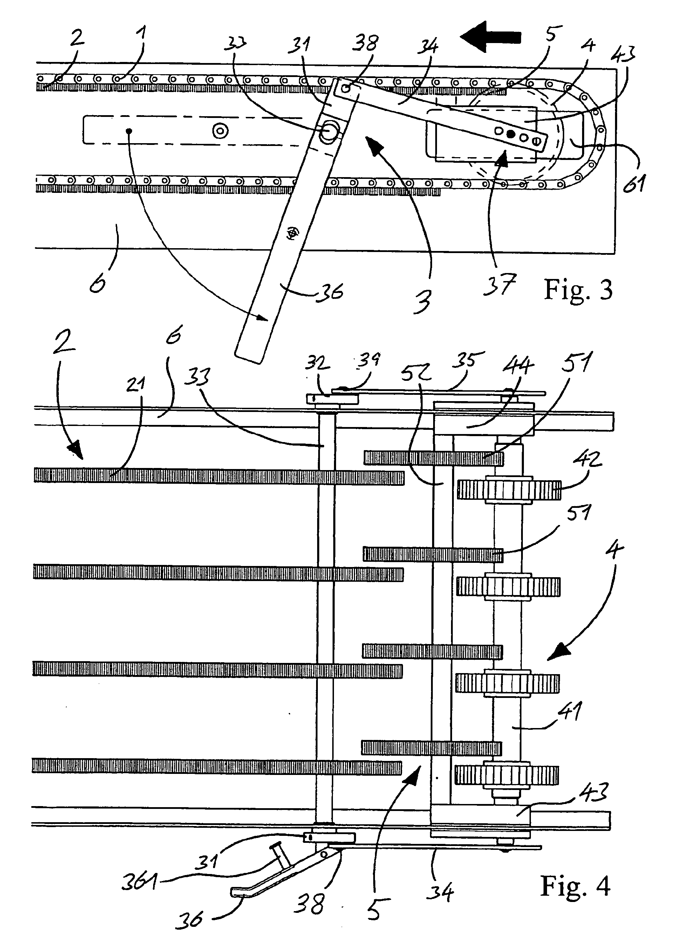

Die Fig. 3 und 4 zeigen die Vorrichtung gemäss den Fig. 1 und 2 in einem gelösten Zustand. Ein Drehen des Betätigungshebels 36 um die Kurbelachse 33 aus der gestreckten Lage dreht die Kurbelachse 33 und mit ihr die Kurbelhebel 31, 32. Die Gelenke 38, 39 zwischen den Kurbelhebeln 31, 32 und den Hebelstangen 34, 35 beugen sich mit der Drehung des Betätigungshebels 36 und die mit den Kurbelhebeln 31, 32 verbundenen Enden der Hebelstangen 34, 35 werden um die Kurbelachse 33 gedreht. Dadurch werden die Hebelstangen 34, 35 verschoben und der Abstand zwischen der Kurbelachse 33 und der Umlenkachse 41 verringert sich. Gleichzeitig verschieben sich die Stützmittel 5 zusammen mit den verschiebbaren Umlenkmitteln 4 in Laufrichtung des Transportbandes 1.

Zum Strecken des Transportbandes 1 wird der Betätigungshebel 36 in entgegengesetzter Richtung gedreht, bis die Gelenke 38, 39 auf einer Ebene mit der Umlenkachse 41 und der Kurbelachse 33 liegen. Während dieses Streckvorgangs nimmt das Verhältnis von Spannkraft zu Betätigungskraft stetig zu, was eine leichte manuelle Bedienung der Vorrichtung gewährleistet.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen.

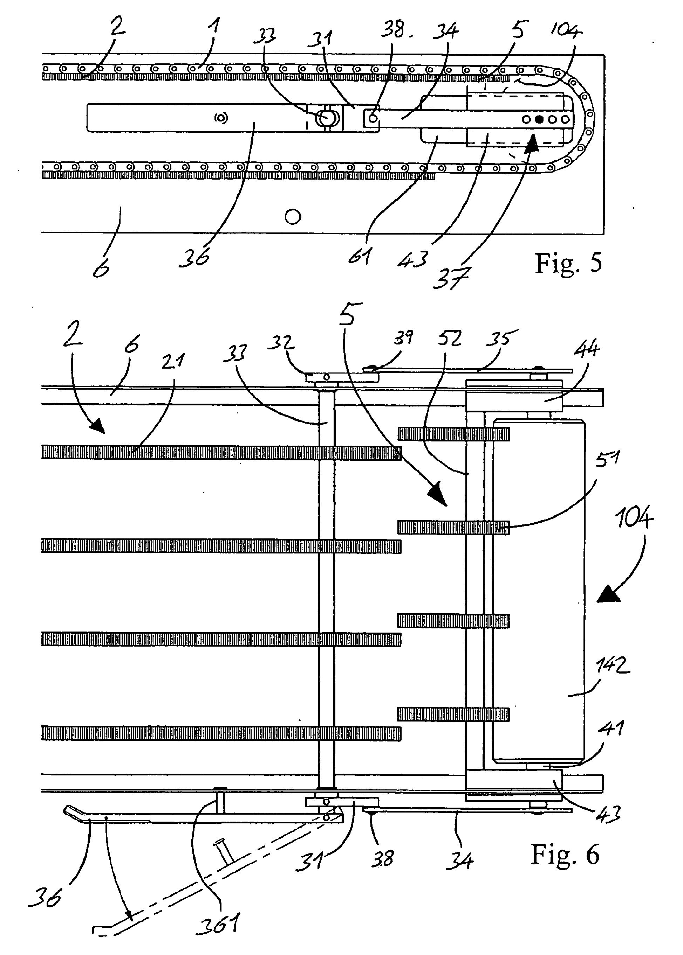

In den Fig. 5 und 6 ist ein zweites Ausführungsbeispiel einer Transportbandförderanlage mit einer erfindungsgemässen Vorrichtung in gestrecktem Zustand abgebildet, bei welchem die verschiebbaren Umlenkmittel 104 anstelle von Umlenkzahnrädern eine Umlenkrolle 142 umfassen. Ansonsten gilt das zum ersten Ausführungsbeispiel Gesagte.

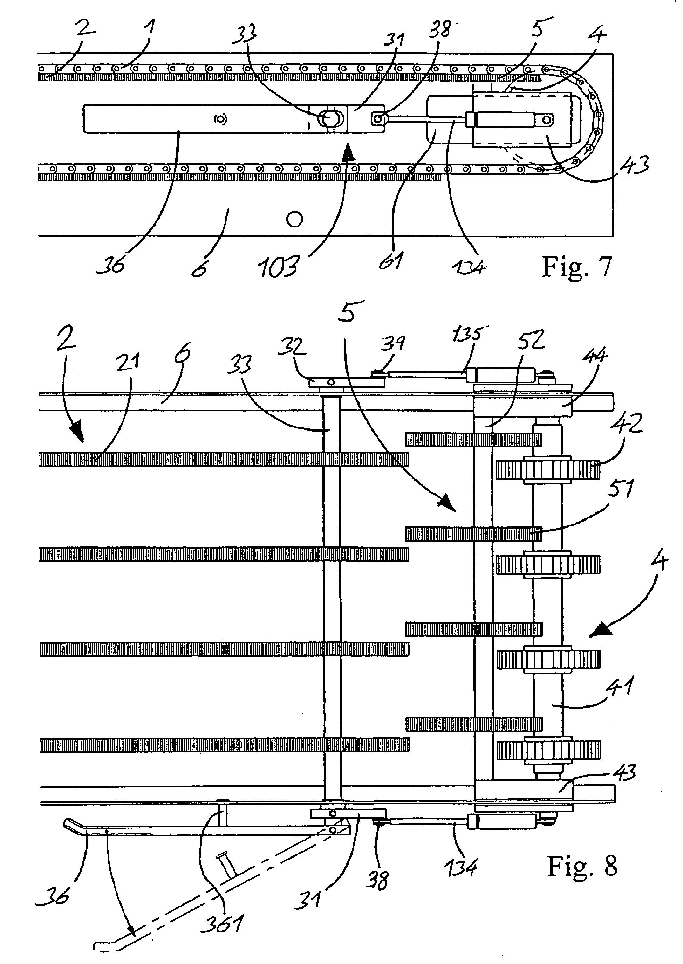

Die Fig. 7 und Fig. 8 zeigen ein drittes Ausführungsbeispiel einer Transportbandförderanlage mit einer erfindungsgemässen Vorrichtung in gestrecktem Zustand, bei dem die Verschiebemittel 103 federnd ausgestaltete Hebelstangen 134, 135 umfassen. Die Hebelstangen 134, 135 umfassen zu diesem Zweck Spiral- oder Gasfedern. In gestrecktem Zustand des Transportbandes 1 wirkt durch die federnden Hebelstangen 134, 135 eine zusätzliche Spannkraft auf die verschiebbaren Umlenkmittel 4 und somit auf das Transportband 1. Mittels so angeordneten federnden Hebelstangen 134, 135 kann eine Bandspannung erzeugt werden, die einen schlupflosen Betrieb des Transportbandes 1 gewährleistet, auch wenn kein Banddurchhang vorhanden ist. Das kann speziell bei Raumverhältnissen ein Vorteil sein, die keinen ausreichenden Banddurchhang zulassen.

Ansonsten gilt das zum ersten Ausführungsbeispiel Gesagte.

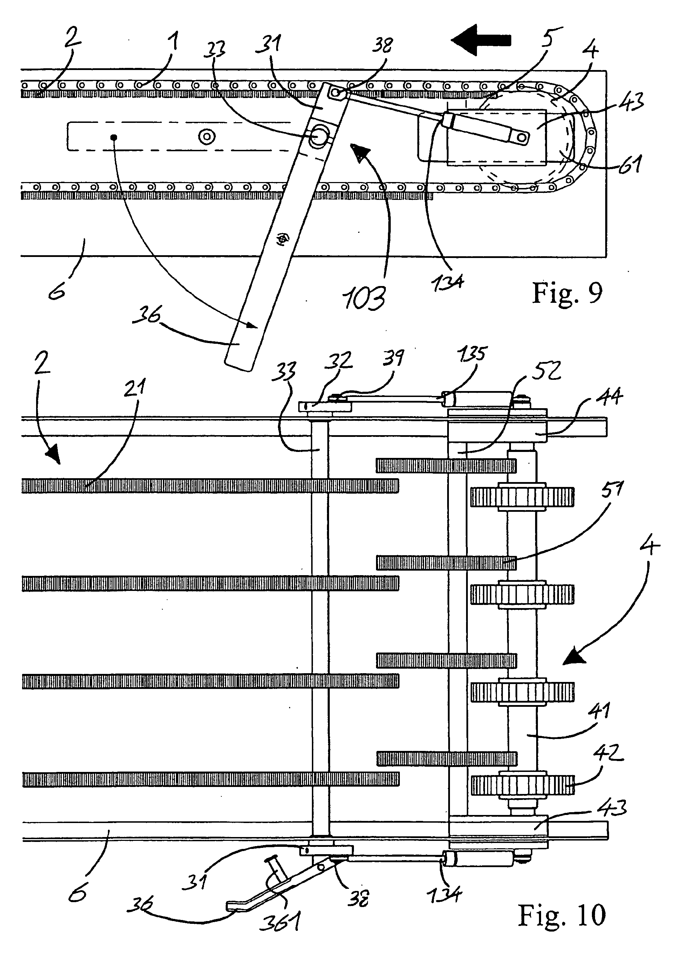

Die Fig. 9 und 10 zeigen die Vorrichtung gemäss den Fig. 7 und 8 in einem gelösten Zustand.

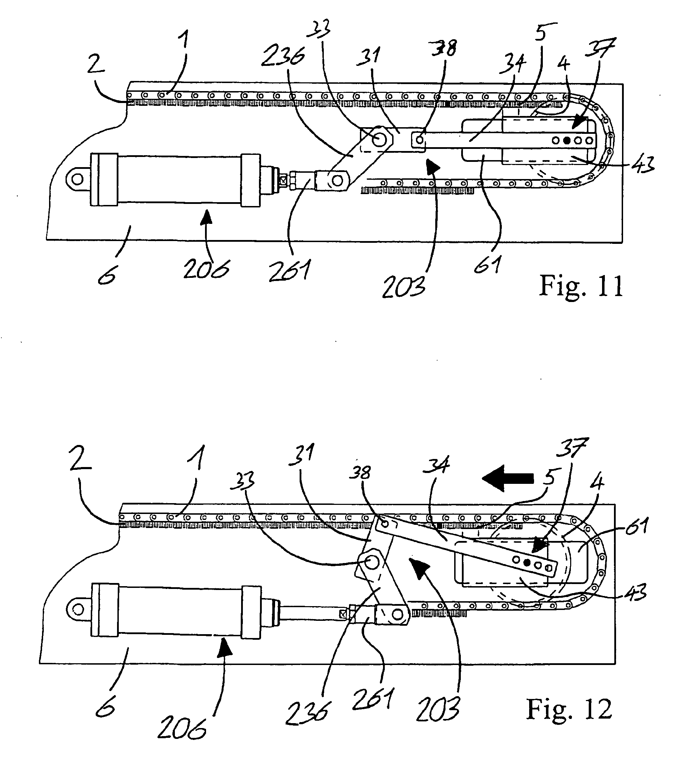

In den Fig. 11 und 12 ist ein viertes Ausführungsbeispiel einer Transportbandförderanlage mit einer erfindungsgemässen Vorrichtung in gestrecktem bzw. gelöstem Zustand abgebildet. Zur Automatisierung der Betätigung eines Betätigungshebels 236 umfassen die Verschiebemittel 203 einen Pneumatikantrieb 206 mit Zylinder 262 und darin verschiebbarem Kolben. Der Kolben ist über ein Koppelelement 261 mit dem Betätigungshebel 236 drehbar verbunden, während der Zylinder 262 mit dem Rahmen 6 der Transportbandförderanlage drehbar verbunden ist. Befindet sich die Vorrichtung in gestrecktem Zustand, ist der Pneumatikantrieb 206 in Längsrichtung parallel zum Transportband 1 angeordnet und befindet sich in zusammengezogenem Zustand. Zum Lösen des Transportbandes 1 dreht der Pneumatikzylinder 206 den Betätigungshebel 236 um die Kurbelachse 33.

Zu den vorbeschriebenen erfindungsgemässen Vorrichtungen sind weitere konstruktive Variationen realisierbar.

## Patentansprüche

1. Vorrichtung zum Strecken und Lösen eines über Umlenkmittel geführten endlosen Transportbandes (1), welches zwischen den Umlenkmitteln durch eine Stützkonstruktion (2) zusätzlich gestützt ist, wobei die Vorrichtung Verschiebemittel (3; 103; 203) zum Verschieben von verschiebbaren Umlenkmitteln (4; 104) parallel zur Laufrichtung des Transportbandes (1) umfasst und Stützmittel (5), welche beim Verschieben der verschiebbaren Umlenkmittel (4; 104) parallel zur Laufrichtung des Transportbandes (1) mitverschiebbar sind,
wobei die Stützmittel (5) das Transportband (1) im Bereich zwischen der Stützkonstruktion (2) und den verschiebbaren Umlenkmitteln (4; 104), in dem das Transportband (1) von der Stützkonstruktion (2) und den verschiebbaren Umlenkmitteln (4; 104) nicht gestützt ist, in jeder Verschiebestellung durchgehend stützen,
**dadurch gekennzeichnet, dass** die Stützkonstruktion (2) Gleitleisten (21) umfasst und die Stützmittel (5) Gleitleistenstücke (51) umfassen, wobei die Gleitleistenstücke (51) zu den Gleitleisten (21) seitlich versetzt sind.

2. Vorrichtung nach Anspruch 1, **dadurch gekennzeichnet, dass** die Verschiebemittel (3; 103; 203) zwei Kurbelhebel (31, 32) umfassen, die über eine Kurbelachse (33) drehfest miteinander verbunden sind und die jeweils über ein Gelenk (38, 39) mit jeweils einer Hebelstange (34, 35; 134, 135) drehbar verbunden sind, welche Hebelstangen (34, 35) ihrerseits mit den verschiebbaren Umlenkmitteln (4; 104) verbunden sind.

3. Vorrichtung nach Anspruch 2, **dadurch gekennzeichnet, dass** die verschiebbaren Umlenkmittel (4; 104) eine Umlenkachse (41) aufweisen und die Verschiebemittel (3; 103; 203) so angeordnet sind, dass die Gelenke (38, 39) bei gestrecktem Transportband (1) in einer Ebene zwischen der Umlenkachse (41) und der Kurbelachse (33) liegen.

4. Vorrichtung nach Anspruch 2 oder 3, **dadurch gekennzeichnet, dass** die Verschiebemittel (3; 103; 203) einen mit der Kurbelachse (33) verbundenen Betätigungshebel (36; 236) aufweisen, mit dem die Kurbelachse (33) drehbar ist.

5. Vorrichtung nach einem der Ansprüche 2 bis 4, **dadurch gekennzeichnet, dass** die Kurbelhebel (31, 32) oder die Hebelstangen (134, 135) federnd, insbesondere als Spiral- oder Gasfedern, ausgestaltet sind.

6. Vorrichtung nach einem der Ansprüche 2 bis 5, **dadurch gekennzeichnet, dass** die Hebelstangen (34, 35; 134, 135) mehrere Verbindungslöcher (37) aufweisen, über die sie mit den Kurbelhebeln (31, 32) oder mit den verschiebbaren Umlenkmitteln (4; 104) verstellbar verbunden sind.

7. Vorrichtung nach einem der Ansprüche 2 bis 6, **dadurch gekennzeichnet, dass** sie Mittel zum automatisierten Drehen der Kurbelhebel (31, 32) aufweist, insbesondere einen Pneumatikantrieb (206).

8. Vorrichtung nach einem der Ansprüche 1 bis 7, **dadurch gekennzeichnet, dass** die verschiebbaren Umlenkmittel (4; 104) ortsfest mit den Stützmitteln (5) verbunden sind.

## Claims

1. Device for tensioning and loosening of an endless conveyor belt (1) which is guided over deflection means, which is additionally supported between the deflection means by a support construction (2), wherein the device comprises displacement means (3; 103; 203) for displacing of displaceable deflection means (4; 104) parallel to the direction of travel of the conveyor belt (1) and support means (5), which are co-displaceable with the displacing of the displaceable deflection means (4; 104) parallel to the direction of travel of the conveyor belt (1), wherein the support means (5) support the conveyor belt (1) throughout in each displacement position, in the region between the support construction (2) and the displaceable deflection means (4; 104), in which the conveyor belt (1) is not supported by the support construction (2) and the displaceable deflection means (4, 104), **characterised in that** the support construction (2) comprises sliding bars (21) and the support means (5) comprise sliding bar pieces (51), wherein the sliding bar pieces (51) are arranged laterally offset to the sliding bars (21).

2. Device according to claim 1, **characterised in that** the displacement means (3; 103; 203) comprise two crank levers (31, 32), which are connected via a crank axle (33) such that they are not rotatable in relation to each other, and are each rotatably connected with a lever rod (34, 35; 134, 135) via a link (38, 39), the lever rods (34, 35) for their part being connected with the displaceable deflection means (4; 104).

3. Device according to claim 2, **characterised in that** the displaceable deflection means (4; 104) have a deflection axle (41) and the displacement means (3; 103; 203) are arranged such that the links (38, 39) in the tensioned conveyor belt (1) lie in a plane between the deflection axle (41) and the crank axle (33).

4. Device according to claim 2 or 3, **characterised in that** the displacement means (3; 103; 203) have an operating lever (36; 236) connected with the crank axle (33), with which the crank axle (33) is rotatable.

5. Device according to any one claims 2 to 4, **characterised in that** the crank levers (31, 32) or the lever rods (134, 135) are sprung designed, in particular as coil springs or pneumatic springs.

6. Device according to any one of claims 2 to 5, **characterised in that** the lever rods (34, 35; 134, 135) have several connection gaps (37), via which they are adjustably connected with the crank levers (31, 32) or with the displaceable deflection means (4; 104).

7. Device according to any one of claims 2 to 6, **characterised in that** it has means for automated rotating of the crank levers (31, 32), in particular a pneumatic drive (206).

8. Device according to any one of claims 1 to 7, **characterised in that** the displaceable deflection means (4; 104) are fixedly connected with the support means (5).

## Revendications

1. Dispositif pour tendre et relâcher une bande transporteuse (1) sans fin, guidée sur des moyens de renvoi, la bande étant soutenue en plus entre les moyens de renvoi, au moyen d'une construction d'appui (2), le dispositif comprenant des moyens de déplacement (3 ; 103 ; 203) pour déplacer des moyens de renvoi (4 ; 104) déplaçables, parallèlement à la direction de défilement de la bande transporteuse (1), et des moyens d'appui (5), qui, lors du déplacement des moyens de renvoi (4 ; 104) déplaçables, sont déplaçables conjointement, parallèlement à la direction de déplacement de la bande transporteuse (1)
où les moyens d'appui (5) soutiennent de façon continue à chaque position de déplacement la bande transporteuse (1) dans la zone située entre la construction d'appui (2) et les moyens de renvoi (4 ; 104) déplaçables, dans laquelle la bande transporteuse (1) n'est pas soutenue par la construction d'appui (2) et les moyens de renvoi (4 ; 104) déplaçables,
**caractérisé en ce que** la construction d'appui (2) comprend des bandes de glissement (21), et les moyens d'appui (5) comprennent des éléments de bandes de glissement (51), les éléments de bandes de glissement (51) étant décalés latéralement par rapport aux bandes de glissement (21).

2. Dispositif selon la revendication 1, **caractérisé en ce que** les moyens de déplacement (3 ; 103 ; 203) comprennent deux leviers de manivelle (31, 32), reliés entre eux de façon non-pivotante, par un axe de manivelle (33), et reliés de façon pivotante à chaque fois un bras de levier (34, 35 ; 134, 135), par l'intermédiaire d'une articulation (38 ; 39), les bras de levier (34, 35) étant de leur côté reliés aux moyens de renvoi (4 ; 104) déplaçables.

3. Dispositif selon la revendication 2, **caractérisé en ce que** les moyens de renvoi (4 ; 104) déplaçables présentent un axe de renvoi (41), et les moyens de déplacement (3 ; 103 ; 203) sont disposés de manière que les articulations (38, 39), lorsque la bande transporteuse (1) est tendue, sont situés dans un plan défini entre l'axe de renvoi (41) et l'axe de manivelle (33).

4. Dispositif selon la revendication 2 ou 3, **caractérisé en ce que** les moyens de déplacement (3 ; 103 ; 203) présentent un levier d'actionnement (36 ; 236) relié à l'axe de manivelle (33), levier d'actionnement à l'aide duquel l'axe de manivelle (33) est susceptible de tourner.

5. Dispositif selon l'une des revendications 2 à 4, **caractérisé en ce que** les leviers de manivelle (31, 32) ou les bras de levier (134, 135) sont de réalisation élastique, en particulier sont réalisés sous forme de ressorts à branches ou à gaz.

6. Dispositif selon l'une des revendications 2 à 5, **caractérisé en ce que** les bras de levier (34, 35 ; 134, 135) présentent plusieurs trous de liaison (37), par lesquels ils sont reliés de façon réglable aux leviers de manivelle (31, 32) ou aux moyens de renvoi (4 ; 104) déplaçables.

7. Dispositif selon l'une des revendications 2 à 6, **caractérisé en ce qu'**il présente des moyens pour la rotation automatisée des leviers de manivelle (31, 32), en particulier un entraînement pneumatique (206).

8. Dispositif selon l'une des revendications 1 à 7, **caractérisé en ce que** les moyens de renvoi (4; 104) déplaçables sont reliés de façon localement fixe aux moyens d'appui (5).
